# EUROPEAN PATENT SPECIFICATION

(11) **EP 4 332 820 B1**
(45) Date of publication and mention of the grant of the patent: **04.11.2026**
(21) Application number: 23192043.0
(22) Date of filing: 17.08.2023
(51) Int. Cl.: G06F 30/27, G06F 30/10

(54) **SYSTEM AND METHOD FOR ENERGY STORAGE DEVICE GENERATIVE DESIGN**
SYSTEM UND VERFAHREN FÜR GENERATIVES DESIGN EINER ENERGIESPEICHERVORRICHTUNG
SYSTÈME ET PROCÉDÉ DE CONCEPTION GÉNÉRATIVE DE DISPOSITIF DE STOCKAGE D'ÉNERGIE

(30) Priority: 30.08.2022 US 202217823274
(43) Date of publication of application: 06.03.2024
(73) Proprietor: DASSAULT SYSTEMES AMERICAS CORP., Waltham, MA 02451 (US)
(72) Inventor: Doyle, Michael Joseph, Inverness, FL (US); Chattopadhyay, Abhijit, Tokyo (JP)
(74) Representative: Bandpay & Greuter

(56) References cited:
- US-A1- 2022 074 994
- US-B2- 10 254 349
- ANDREA GAYON-LOMBARDO ET AL: "Pores for thought: The use of generative adversarial networks for the stochastic reconstruction of 3D multi-phase electrode microstructures with periodic boundaries", ARXIV.ORG, CORNELL UNIVERSITY LIBRARY, 201 OLIN LIBRARY CORNELL UNIVERSITY ITHACA, NY 14853, 17 February 2020 (2020-02-17), XP081658058

## Description

### BACKGROUND

Generative design refers to a technology in which a model, such as a three-dimensional (3D) computer-aided design (CAD) model or another type of computer-based model, may be created and optimized by computer software. A designer/engineer/scientist can typically interact with the technology to create superior designs and drive product innovation more quickly. Generative design can be considered a design exploration process that expands the designer's known universe of valid solutions to their design challenge.

For example, a designer may provide parameters, such as materials, size, weight, strength, manufacturing methods, etc., for non-limiting examples, and the generative design software may explore possible combinations of a solution- quickly generating hundreds or even thousands of design options. From there, the designer, or software, can filter and select the outcomes to best meet the goals of the design process. With generative design, designers are not limited by their own imaginations or past experience.

While inputs to a generative design tool may be similar to the inputs to many optimization tools, generative design produces many valid (*e*.*g*., high performance yet cost-effective) designs or solutions instead of one optimized version of a solution. In addition to creating entirely new solutions, another area where generative design stands out is that it may take manufacturability into account. With generative design, simulation may be built into the design process and the generative design software can, for non-limiting example, only produce designs that can be fabricated with a specified manufacturing method(s) or in accordance with parameters and/or requirements of the specified manufacturing method(s).

D1: US 2022/074994 A1 (SENN MELANIE [US] ET AL) 10 March 2022 (2022-03-10) (hereinafter, "D1") describes a method, apparatus, and system for battery material screening. According to D1, microstructure generation parameters for a plurality of microstructures are received, where the microstructure generation parameters include microstructure characteristics. Document D1 describes that microstructure statistics are generated using a first artificial intelligence (AI) model, where the received microstructure generation parameters are inputs for the first AI model. Document D1 further describes that microstructure properties are predicted using a second AI model for the microstructures based on the generated microstructure statistics, the received microstructure generation parameters, and battery cell characteristics. According to D1, it is determined whether at least one of the microstructures is within a predefined energy profile range based on the predicted microstructure properties. *See* D1, Abstract.

### SUMMARY

Various embodiments of the present disclosure relate generally to generative design of an energy storage device. Example embodiments enable compounds, ingredients, additives, formulae, and recipes, for non-limiting examples, to be designed/identified via generative design for use in energy storage devices. Example embodiments enable such design/identification of compounds, ingredients, additives, formulae and recipes, singly or in combination, to affect performance of an energy storage device, such as a battery for non-limiting example. The performance may be based on attributes, such as capacity, temperature tolerance, maximal charge and discharge rates or profiles, cycle lifespan, ease of production, quality, safety, reprocessing or repurposing at end-of-life, and shape, configuration, or format of the battery for non-limiting examples.

There are a number of challenges with reference to a battery that may be addressed via a generative design applied to same. Battery manufacturing is a complex, iterative, multi-element process. For example, battery manufacturing may include electrode production. The electrode production may include production of anodes, cathodes, active materials, electrolytes, binders, and separators for non-limiting examples. The battery manufacturing may include cell production in which single units that perform the function of a "battery" are produced. The battery manufacturing may include module assembly in which multiple cells, encased in a metal case, may be connected with an electronic management system. The battery manufacturing may further include performing pack assembly in which connections of multiple modules, sensors, and a controller may be mounted in a case.

For non-limiting example, a generative design of a battery may take into account state of charge, battery chemistry and technology, efficiency, safety, aging, temperature spread, durability, and sustainability and recycling for non-limiting examples. In this way, the generative design may be optimized to enable a user of the battery to stop worrying about insufficient time to charge and the generative design may find the most performant and safest chemistry for the battery. The generative design may cause the battery to be efficient by generating sufficient power for growing functionalities and may assess battery safety to prevent incidents. The generative design may assess battery durability to prevent capacity loss and may evaluate an effect of temperature spread on the battery's performance. The generative design may assess durability and enable a design for a "green" battery.

For non-limiting examples and with reference to a battery, the generative design may perform chemical ingredient identification, such as additives for an electrolyte, coatings for an electrode, by-product scavengers, and degradation inhibitors. The generative design may perform formula identification, such as mixture design (amounts) and specification design (grades, purities, and impurities). The generative design may determine battery geometry, such as size and form factor, electrode configuration and structure, and tab position and size. The generative design may determine a process design for the battery, such as a process sequence, process operating parameters, manufacturing equipment choices and identifiers, and coating stages and operations. The generative design may further provide testing and quality results for the battery at the end of a manufacturing line, on the line, as installed, as used/aged, and as recycled.

The generative design may advantageously combine advanced data science, machine learning, chem-matinformatics, and structure-based modeling to explore and optimize chemical, configuration, and process spaces. Example embodiments may automate the virtual creation, testing, and selection of novel ingredients, their amounts in a formula, etc., and may incorporate process level parameters. A goal of the generative design may be to reduce the quantity and cost of physical testing as well as performing trade studies across system variables for non-limiting examples.

According to an example embodiment, a computer-implemented method for generative design of an energy storage device comprises automatically building at least one model of an energy storage device. The building may be based on a design parameter space and may employ a machine learning process. The computer-implemented method further comprises automatically performing a simulation of the energy storage device. The simulation may employ the design parameter space, a design evaluation space, and the at least one model built. The performing may include producing at least one prediction of the energy storage device achieving at least one product design objective or the at least one model built achieving at least one model design objective.

The computer-implemented method further comprises automatically evolving at least one of (i) the design parameter space and (ii) the design evaluation space. The evolving may be based on the at least one prediction produced and may employ the machine learning process. In an event the at least one prediction indicates the at least one product design objective has been achieved or the at least one model design objective has been achieved, the computer-implemented method further comprises automatically converging on the design parameter space evolved, thereby completing a generative design of the energy storage device and, otherwise, repeating the building, performing, and evolving.

The design parameter space and design evaluation space may be associated with at least one of: the energy storage device and the at least one model built. The design parameter space may include variables. The variables may include material variables, system variables, or a combination thereof. The variables may be associated with a chemical space of the energy storage device, formula space of the energy storage device, material space of the energy storage device, configuration space of the energy storage device, process space of the energy storage device, or a combination thereof.

The design evaluation space may include at least one test, *e*.*g*., a real-world test, of the energy storage device and performing the simulation may include simulating the at least one test using the at least one model built. A non-limiting example of such a real-world test may identify an onset of cell failure of the energy storage device by repeatedly measuring state of charge over a number of charge cycles at different charge rates. For each design space such measurements can be used to validate the models and so predict the outcomes before production. This enables better process and materials specifications, and also modifications to the design, physical configuration, or recipes of cell components of the energy device to be determined.

The at least one product design objective may include at least one user-specified criterion associated with the energy storage device, at least one machine-generated criterion associated with the energy storage device, or a combination thereof. The at least one product design objective may include a target product profile (TPP). The at least one model design objective may include at least one error threshold associated with a difference between simulated and real-world measurement, a target size for the design parameter space, or a combination thereof.

The evolving may include (a) pruning the design parameter space, (b) pruning the design evaluation space, (c) expanding the design parameter space, (d) expanding the design evaluation space, or (e) a combination of (a)-(d).

The evolving may include maintaining diversity within the design parameter space. The maintaining may include employing a clustering method, pareto method, or a combination thereof.

The computer-implemented method may further comprise employing at least one monitored parameter in the building, evolving, or combination thereof. The at least one monitored parameter may be employed in at least one iteration of the building, evolving, or combination thereof. The at least one monitored parameter may represent at least one real-world result generated via at least one real-world experiment employing the energy storage device. The real-world result may be effectuated based on employing, in the at least one real-world experiment, the design parameter space evolved.

The computer-implemented method may further comprise employing a generative adversarial network (GAN), deep neural network (DNN), Bayesian optimization (BAO), genetic function approximation method, or a combination thereof, in the machine learning process.

The design parameter space may include semantically structured real-world evidence (RWE) data associated with experimentation of the energy storage device.

The computer-implemented method may further comprise automatically storing, in a database, the at least one model built in association with the at least one prediction produced, at least one input of the at least one model built, and at least one output from the at least one model built. Performing the simulation may include inputting the at least one input to the at least one model built and, in response to the at least one input, generating the at least one output from the at least one model built.

The energy storage device may be a battery. Converging on the design parameter space evolved may include identifying at least one of a compound, ingredient, additive, formula, recipe, or combination thereof that enables the at least one product design objective of the energy storage device to be achieved.

According to another example embodiment, a computer-based system for generative design of an energy storage device may comprise at least one memory and at least one processor coupled to the at least one memory. The at least one processor may be configured to automatically build, based on a design parameter space, at least one model of an energy storage device. The building may employ a machine learning process. The at least one processor may be further configured to automatically perform a simulation of the energy storage device. The simulation may employ the design parameter space, a design evaluation space, and the at least one model built. The performing may include producing at least one prediction of the energy storage device achieving at least one product design objective or the at least one model built achieving at least one model design objective.

The at least one processor may be further configured to automatically evolve at least one of (i) the design parameter space and (ii) the design evaluation space. The evolving may be based on the at least one prediction produced and may employ the machine learning process. In an event the at least one prediction indicates the at least one product design objective has been achieved or the at least one model design objective has been achieved, the at least one processor may be further configured to automatically converge on the design parameter space evolved, thereby completing a generative design of the energy storage device and, otherwise, repeat the building, performing, and evolving.

Alternative computer-based system embodiments parallel those described above in connection with the example method embodiments.

According to yet another example embodiment, a non-transitory computer-readable medium for generative design of an energy storage device may have encoded thereon a sequence of instructions which, when loaded and executed by at least one processor, causes the at least one processor to automatically build, based on a design parameter space, at least one model of an energy storage device. The building may employ a machine learning process.

The sequence of instructions may further cause the at least one processor to automatically perform a simulation of the energy storage device. The simulation may employ the design parameter space, a design evaluation space, and the at least one model built. The performing may include producing at least one prediction of the energy storage device achieving the at least one product design objective or the at least one model built achieving at least one model design objective. The sequence of instructions may further cause the at least one processor to automatically evolve at least one of (i) the design parameter space and (ii) the design evaluation space.

The evolving may be based on the at least one prediction produced and may employ the machine learning process. In an event the at least one prediction indicates the at least one product design objective has been achieved or the at least one model design objective has been achieved, the sequence of instructions may further cause the at least one processor to automatically converge on the design parameter space evolved, thereby completing a generative design of the energy storage device and, otherwise, may cause the at least on processor to repeat the building, performing, and evolving.

Alternative non-transitory computer-readable medium embodiments parallel those described above in connection with the example method embodiments.

It should be understood that example embodiments disclosed herein can be implemented in any combination and in the form of a method, apparatus, system, or non-transitory computer readable medium with program codes embodied thereon.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1A is a block diagram of an example embodiment of a computing environment in which a materials scientist is using a computer-based system for generative design of an energy storage device.
FIG. 1B is a block diagram of an example embodiment of a generative process.
FIG. 1C is a block diagram of an example embodiment of an automated molecular design environment.
FIG. 1D is a flow diagram of an example embodiment of a computer-implemented generative method.
FIG. 2 is a block diagram of an example embodiment of a computer-based system for generative design of an energy storage device.
FIG. 3 is block diagram of an example embodiment of a design parameter space.
FIG. 4 is a flow diagram of an example embodiment of a computer-implemented method for generative design of an energy storage device.
FIG. 5 is a block diagram of an example of the internal structure of a computer in which various embodiments of the present disclosure may be implemented.

### DETAILED DESCRIPTION

A description of example embodiments follows.

Example embodiments disclosed herein may relate to generative systems and methods thereof for designing, for non-limiting examples, compounds, ingredients, additives, formulae and recipes for use in an energy storage device and for designing a model of such an energy storage device, such as a battery for non-limiting example. Example embodiments may relate, generally, to materials modeling and simulation of complex material-based systems, such as a battery for non-limiting example. Example embodiments disclosed herein may be applicable to other areas where chemical, material, nano, and domain microstructure may be used to predict and understand product performance and behavior. Example embodiments disclosed herein may also be applied to general, chemically reactive systems, such as fuel cells and chemical process effects for non-limiting examples.

Generative materials design (GMD) is essentially an automation of a model-based exploration of a variable space. The variables may be considered as chemical (e.g., structure, isomers, toxicities, substitutions and sequences), material (e.g., phase, polymorph, intercalates, interstices), formula *(e.g.,* amounts, purities, grades), and processes *(e.g.,* steps, actions, sequence, conditions, parameters). The variables may be specified in a design phase and a system may automate the construction of exemplars. Such construction may then be evaluated using model-based approaches, and the next steps identified via an evolutionary approach.

An example embodiment disclosed herein provides an efficient, automated method of determining optima in property space from material and/or system variables for non-limiting example. An example embodiment of a computer-based system disclosed herein may use virtual cycles in which the system may explore property space for an energy storage device, such as a battery, by "learning" from results of real-world experiments for non-limiting example.

An example embodiment of a computer-based system disclosed herein may, virtually, screen and optimize candidate compounds using a combination of machine learning models and structure-based modeling and simulation methods for non-limiting example. Multi-objective optimization methods may be employed to balance competing objectives, allowing product designers to generate compounds that improve towards a design or target product profile (TPP).

In a "real" cycle phase, such product designers may synthesize and test the most promising virtual compounds in a lab setting. New data generated via such testing may be input to the computer-based system to improve predictive models and refine the exploration of chemical space for non-limiting example. Such performing of real-world experiments may be useful to generate new data used to improve models and perform optimization. According to an example embodiment, such virtual (V) and real (R), namely V+R, active learning cycles may continue until a product designer has identified compounds that meet the TPP for non-limiting example.

An example embodiment disclosed herein may include a computational method that uses an adversarial deep neural computing approach with an iterative and stochastic process to obtain realistic computer models of a battery for non-limiting example. For non-limiting example, an example embodiment of a computer-based system or a computer-implemented method may link four areas of science and modeling, namely:
1. Quantitative Structure-Activity Relationship Modeling (QSAR) - QSAR modeling of empirical data on quality, chemical and material systems can be performed using established and validated machine learning methods. These yield highly predictive and extensible estimations of performance/activity for proposed chemistries and mixture.
2. TPP - Early attention to balancing all attributes required for a chemical system to proceed from a new product innovation phase to a pilot scale and production phase may employ multi-parametric optimization at all stages *(e.g.,* safety, manufacturability, novelty, etc.).
3. Active Learning (AL) - This special case of machine learning tightly couples real-world and virtual activities, allowing a learning method to query a user (or another information source) to label new data points with the desired outputs. In GMD, this means intentionally synthesizing mixtures and recipes that will expand the domains of applicability of machine learning models.
4. Generative Chemistry - While enumeration of all chemicals that could be influential in, for non-limiting example, a battery electrode coating or electrolyte development, is not possible with reasonable resources, chemists can explore a large area of chemical space through iterative alteration of starting chemistries or formula sequences guided by a property-based multi-dimensional fitness function.

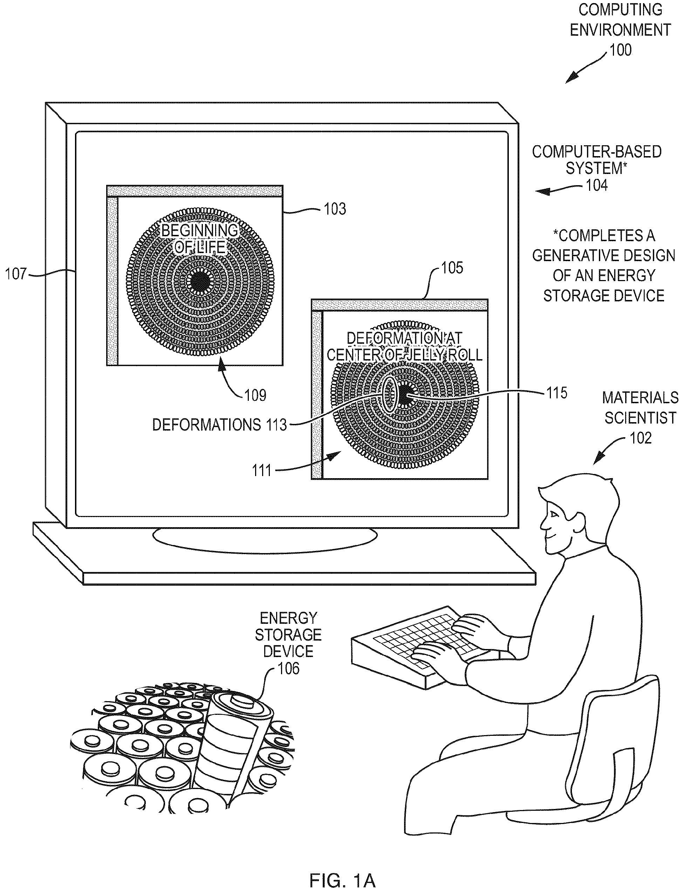

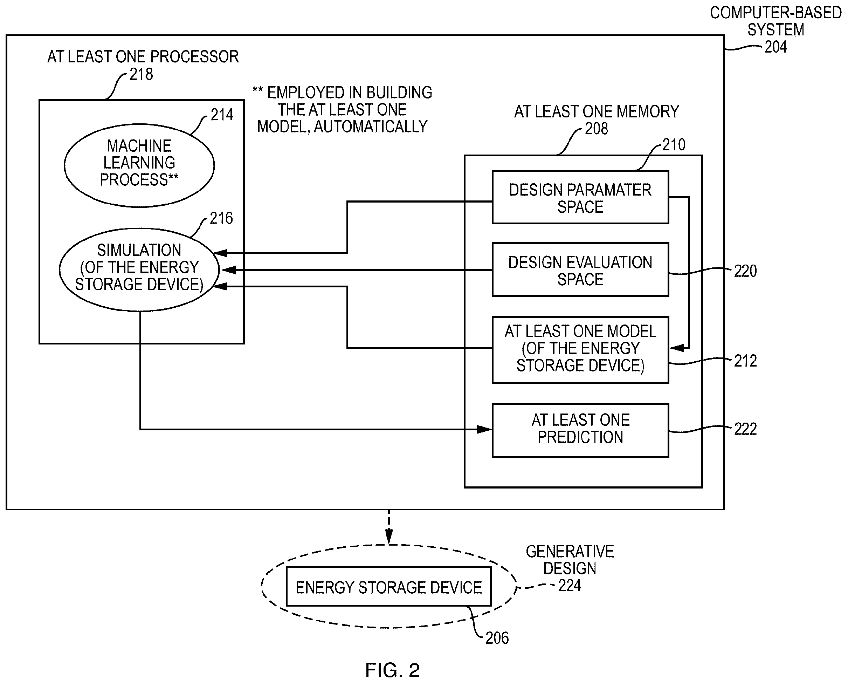

The GMD disclosed herein may then use an evolutionary method to drive a material-based system, such as a battery for non-limiting example, to maximum desirability as well as maximum synthesizability/processability. Such a process may, for non-limiting example, generate millions of options over multiple cycles, which can, according to an example embodiment, be pruned automatically against user-defined criteria in order to end up with a small, optimal set of options for a solution set. According to an example embodiment, a clustering or Pareto method may be employed to maintain diversity, ensuring that the solution set is not a nearly identical group of materials with only slight variations from each other. After completing an optimization, namely a "virtual experiment" or simulation, a materials scientist can, for non-limiting example, view the convergence in a chart(s) in order to decide whether to synthesize and test some of the resulting structures. Alternatively, the materials scientist can adjust the optimization parameters and perform another run, that is, another virtual experiment/simulation. An example embodiment of a computer-based system that may be used by such a materials scientist is disclosed further below with regard to FIG. 1A and FIG. 2.

An example embodiment of the computer-based system may enable a user, such as a material scientist for non-limiting example, to advantageously:
- Use desirability profiles to configure each optimization objective.
- Graphically adjust each desirability profile based on probabilities determined by applying a machine learning model to known compounds.
- Increase the "weight" of the most important objectives (e.g., activity) to help ensure that such objectives are met during optimization.
- Specify an overall goal of the optimization, such as, for non-limiting example, whether immediate compound improvement or exploration of chemical space should be used to improve a model, whether compound improvement features should be applied to improve production performance and quality metrics of the product, and whether a series of lower scale models should be employed to enable better and more accurate or robust model development.

An example embodiment of a computer-based system or computer implemented method disclosed herein may, for non-limiting example, use an abstraction of an energy storage device in a form of models identified at two levels, first to enrich, in a closed-loop approach, the forms used in feature generation and, second, in high-level subsequent models. An example embodiment disclosed herein may be used automatically, with no or minimal user input, which allows for the rapid exploration of design parameter space and autonomous model development as new data is accumulated from testing or production systems, resulting in an improved user experience due to availability of multiple models. An advantage of this approach is that it builds in synthesizability of compounds. Enumeration can also be based on Markush structures with a core molecule with reaction-based (R) group positions and sets of attachment fragments for non-limiting examples. Such an approach may be employed in a computer-based system, such as the computer-based system 104 of FIG. 1A, disclosed below.

FIG. 1A is a block diagram of an example embodiment of a computing environment 100 in which a materials scientist 102 is using a computer-based system 104 for generative design of an energy storage device 106. A materials scientist is a person who studies the structures and chemical properties of various materials to develop new products or enhance existing ones. It should be understood that the computer-based system 104 is not limited to being used by a materials scientist. Further, in the example embodiment of FIG. 1A, the energy storage device 106 is a battery for non-limiting example. While the example embodiment of FIG. 1A may describe the energy storage device 106 as a battery and, more particularly, as a lithium-ion battery, it should be understood that example embodiments disclosed herein are not limited to a battery or lithium-ion battery.

In the example embodiment of FIG. 1A, the materials scientist 102 is interacting with two user interfaces provided by the computer-based system 104, namely a first user interface (UI) 103 and a second UI 105. In one computer operating system, the user interfaces 103, 105 are implemented as so-called windows. In a global network (internet) server based computer system, the user interfaces 103, 105 may be implemented as different tabs, screen views, or the like. The first UI 103 and second UI 105 are presented on a display screen 107 of the computer-based system 104 for user interaction. It should be understood that the computer-based system 104 is not limited to providing two user interfaces (UIs).

In the example embodiment, the energy storage device 106 is a lithium-ion battery. Lithium-ion batteries can last many years but sometimes exhibit rapid, nonlinear degradation that severely limits battery lifetime. In the example embodiment of FIG. 1A, the first UI 103 includes a first simulated representation 109 of a slice of a "jelly roll" of the lithium-ion battery at its beginning of life and the second UI 105 includes a second simulated representation 111 of the slice of the jelly roll following cycle life simulation. In the second simulated representation 111 of the slice, deformations 113 have formed as the jelly roll has deformed inwards toward the core 115 (*i*.*e*., center) of the jelly roll. Such deformations 113 may be attributed to a simulated increase in internal pressure of the jelly roll during the cycle life simulation. The materials scientist 102 may employ the computer-based system 104 to perform GMD of such a lithium-ion battery to produce a design that avoids such deformations 113 for non-limiting example.

According to an example embodiment, the computer-based system 104 may, for non-limiting example, be configured to:
- explore a chemical space;
- include reaction-based/R group-based enumeration;
- filter virtual compounds for undesirable sub-structures based on universal, company, and project-specific criteria;
- incorporate design preferences based on battery ingredient profiles tailored to a materials functional area; and
- prioritize based on synthesizability considerations.

GMD offers a variety of methods for generating virtual compounds. An evolutionary method may generate molecules for each input molecule using a variety of molecular transformations, including Matched Molecular Pairs (MMP), replacement of ring assemblies, molecular scaffolds, molecular variations (split, trim, extend, rearrange, crossovers), and molecular mutations (change of atom and bond types, adding and deleting atoms, opening and closing rings). There are options to bias the generative method to produce compounds similar to a target structure or ones that contain a certain scaffold.

One of the challenges involved in searching for lead compounds is understanding the trade-offs to make when optimizing multiple design criteria. GMD allows a materials scientist, chemist, etc., to design improved lead compounds by maximizing an overall desirability function based on individual desirability profiles based on a TPP. For each objective in the TPP, the materials scientist 102 may use the profiles to specify how good is "good enough" to meet a project goal(s). GMD may be used to display model prediction distributions and empirical probability values *(e.g.,* the probability a compound will be active if the model score exceeds a certain value), for example, via the display screen 107, to aid in this process. Alternatively, GMD may be used to provide reasonable default desirability profiles based on the TPP.

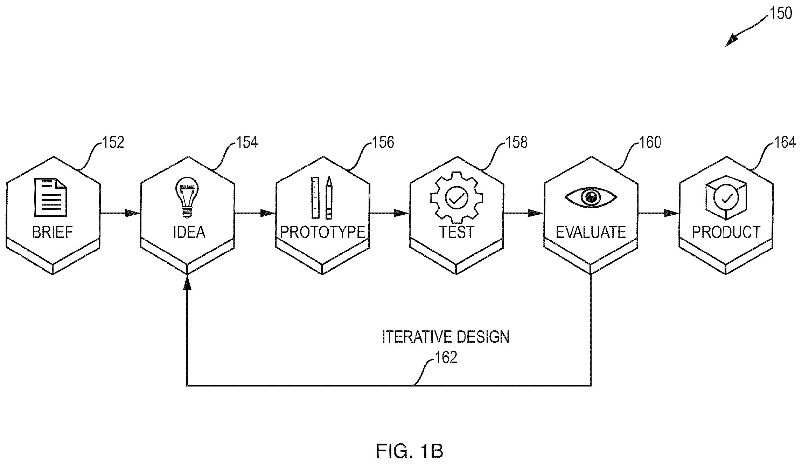

Ready access to both positive and negative data allows scientists, such as the materials scientist 102, to reinforce predictive models and track the lineage of compounds from ideation into development. This 'digital continuity' is useful for tracking intellectual property (IP) produced in a discovery organization. An example embodiment of a generative process that enables same is described below with regard to FIG. 1B.

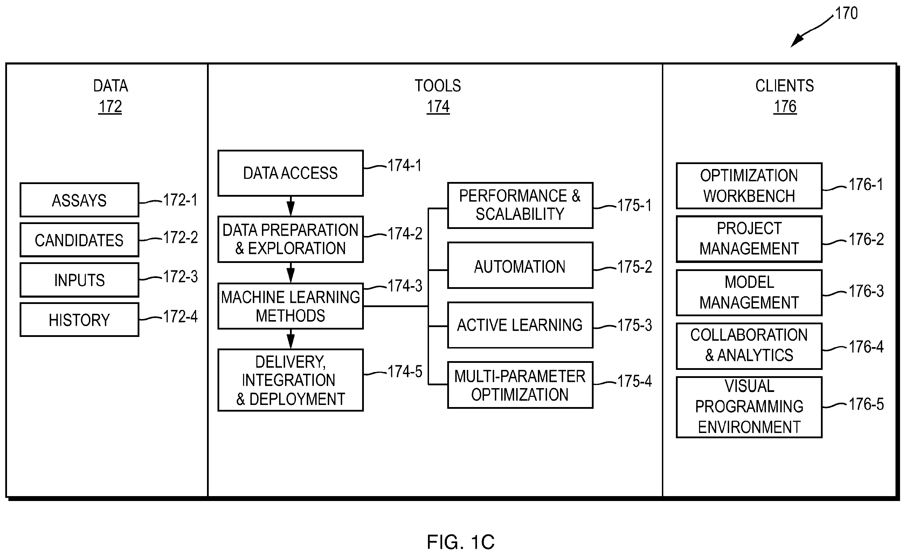

FIG. 1B is a block diagram of an example embodiment of a generative process 150. The generative process 150 may include a data input phase 152, ideation phase 154, prototype phase 156, test phase 158, and evaluation phase 160. The generative process 150 may perform an iterative design 162 (returning to the ideation phase 154 based on the evaluation phase 160) which ultimately leads to a product design 164 based on results of the evaluation phase 160. The generative process 150 may be employed as part of an automated molecular design environment, such as the environment 170 disclosed below with regard to FIG. 1C

FIG. 1C is a block diagram of an example embodiment of an automated molecular design environment 170. The automated molecular design environment 170 includes data 172, tools 174, and clients 176. For non-limiting example, the data 172 may include, assays 172-1, candidates 172-2, inputs 172-3, and/or history 172-4. The tools 174 may include data access 174-1, data preparation and exploration 174-2, machine learning methods 174-3, and/or delivery, integration, and deployment 174-5.

The machine learning methods 174-3 may include performance and scalability methods 175-1, automation methods 175-2, active learning methods 175-3, and/or multiparameter optimization methods 175-4 for non-limiting examples. The clients 176 may include an optimization workbench 176-1, project management 176-2, model management 176-3, collaboration and analytics 176-4, and/or a visual programming environment 176-5 for non-limiting examples. Such an automated molecular design environment 170 may be included in the computing environment 100 of FIG. 1A, disclosed above and in further detail below. The chemical and materials design approach may include a design of anti-ageing additives in a battery electrolyte. Given the many competing design requirements, the ability to screen the large chemical space down to a human-comprehensible set and then to prioritize that set for either performance goals or model development goals can be achieved by artificial intelligence. In addition, competing requirements can be evaluated using such models to achieve a balance between competing needs.

With reference to FIG. 1A and FIG 1C, the automated molecular design environment 170 represents components of the computer-based system 104 according to an example embodiment. As shown in FIG. 1C, such components include sources of data and real-world evidence, namely the assays 172-1, candidates 172-2, inputs 172-3, and history 172-4 of the data 172. The components further include the tools 174 that are used to access, transform, reify and analyze these various sources of data 172. The components further include consuming systems, referred to as client technologies or, simply, the clients 176. The clients 176 can interact with the tools 174, derivatives of, models about, and the native data 172. Such framework, namely the automated molecular design environment 170, is much more than just the sum of its constituent parts. The environment 170 implicitly contains entity lifecycle as well as state and message frameworks in a multi-user/multi-role environment as identified by the data 172, tools 174, and clients 176.

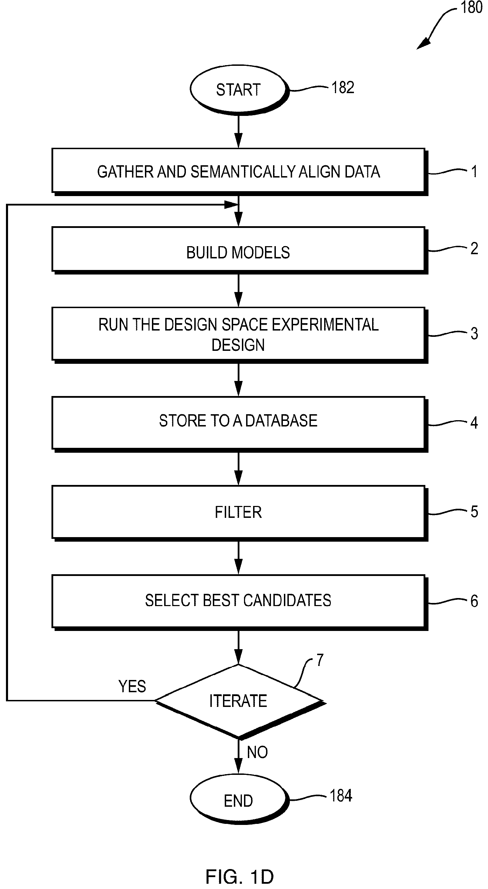

With reference back to FIG. 1A and 1B, the generative process 150 may be implemented by the computer-based system 104 and may implement a generative method, such as disclosed below with regard to FIG. 1D.

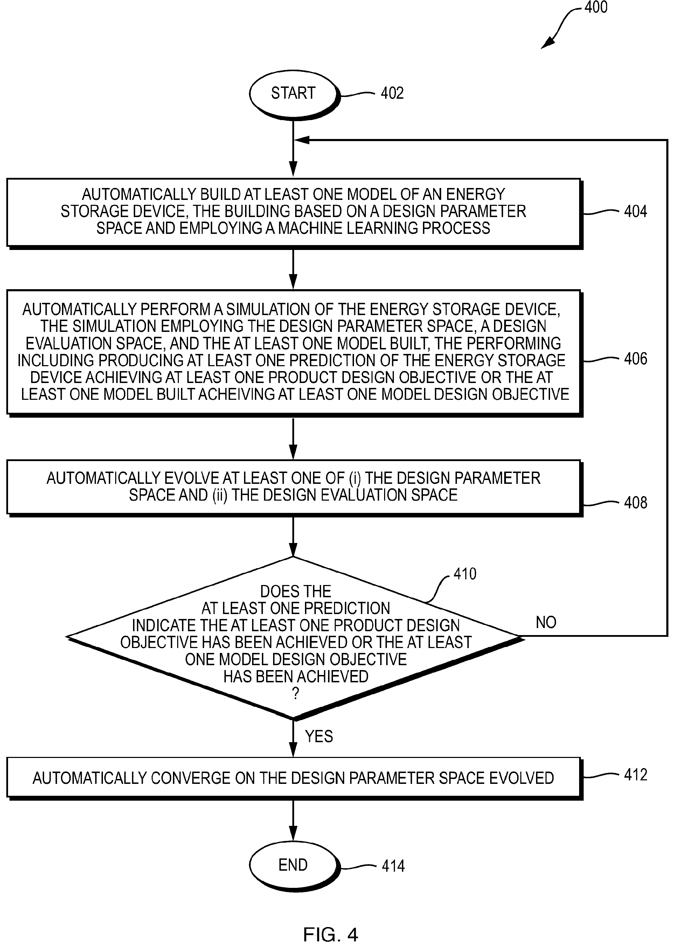

FIG. 1D is a flow diagram of an example embodiment of a computer-implemented generative method (180). The generative method (180) may begin (182) and (1) gather and semantically align data, (2) build models of properties of interest, such as open cell voltage, flammability, capacity, maximum cycle life, maximum charging current (C-rate) on discharge and/or charge for non-limiting examples in an event the product design 164 is, for non-limiting example, for a battery, (3) run the design space experimental design across a set of variables using the models as predictors, (4) store to a database, (5) filter on user or defined machine criteria, (6) select best candidates and confirm such selections, and (7) iterate from (2) in an event such selections (6) do not meet at least one criterion or, upon convergence (*e*.*g*., the selections meet the at least one criterion), the method thereafter ends (184) in the example embodiment. The at least one criterion may, for non-limiting example, be associated with at least one product design objective or at least one model design objective, such as disclosed further below with regard to FIG. 4. In an embodiment, the at least one criterion may be set by a user or automatically set based on a requirement.

Continuing with reference to FIG. 1D, such alignment of data at (1), model building based on real world evidence at (2), and design space optimization either for property/performance goals or for model building improvement at (3), leads to better virtual evaluation in the evaluation phase 160. The storage action taken at (4), above, provides the storage that fuels or enables the iteration to new ideas and the limitation of the design space to a manageable set of tests and evaluations in the ideation phase 154. The prototype phase 156 and test phase 158 may be actions performed in the real-world that provide results input to the evaluation phase 160 performed by the computer-based system 104, causing the computer-based system 104 to perform the iterative design 162 by returning to the ideation phase 154. Further detail regarding the actions (1)-(7), disclosed above, is provided below. Such actions may be referred to as generative actions and may be performed by the computer-based system 104 and the computer-based system 204 of FIG. 2, disclosed further below.

### Generative Method

### (1) gather and semantically align data

Data for a device, such as a battery, may come from many different levels. For non-limiting example, data may come from a sub-cell chemical level (*e*.*g*., atomistic structures, quantum electronic properties) and a material level (*e*.*g*., purity, grade, structure, and/or phase as well as thermodynamic state and kinetic or reactive behavior, chemical degradation pathways, and/or other information). The data may further come from meso-scopic information, such as particle sizes, particle distributions, structure or layering sequence in the electrodes and the distribution structure of materials and the porosity, tortuosity, and permeability on the electrodes (*i*.*e*., separator, anode, and/or cathode). In addition, a number of the material physical characteristics, such as pore size distributions on the electrodes and effects of processing (*e*.*g*., calendaring winding and compression or stacking) can have direct effect on the performance of the cell.

At a cell level, information may come from a geometry of the cell, *e*.*g*., cylinder vs. pouch vs. prism vs. blade, as well as the sizes of these, *e*.*g*., in cylinders there are different dimensions, such as diameter and height (*e*.*g*., 18x65, 23x70, or 46x80) of cells for non-limiting examples. Such cell and sub-cell characteristics are manufactured and, thus, there are secondary attributes around the ambient conditions of manufacturing and the process or equipment used for the coating of the electrodes, the press geometry for calendaring, and the stacking configuration for the "jelly roll" or the pouch for non-limiting examples. Once the battery is assembled, it is tested in its first "formation" step to create the solid-electrolyte interface, and then it is tested for lifetime repeat cycle performance at different charge rates and different test temperatures.

The semantic alignment of such data is for identifying context (*e*.*g*., which tests relate to which cell) as well as which processes did that cell go through and which batches of materials were those cells constructed from. Such alignment provides the connection of materials characteristics, at the raw material, the sub-cell, cell, and test level.

The complexity of what is a batch vs. sample vs. test vs. experiment vs. quality gate, relies not only on simple linguistic semantics, but also on the interconversion of time and length scales (nano-seconds to hours, or cycles), the connection of designs to models and to originating data (master data alignment), and the persistence of requirements and validation exercise. An example embodiment enables, for non-limiting example, chemical, material, test indices, for alignment of both virtual and real data within a unified data model that incorporates, logical requirements, functional requirements, physical requirements, and results.

At action (2), above, the generative method 180 builds models of properties of interest, such as open cell voltage, flammability, capacity, maximum cycle life, and maximum charging current (C-rate) on discharge or charge, for non-limiting examples. The generative method 180 may build models that estimate from a hybrid of atomistic/material and in-use data, such as telemetry, lifespan, and aging behavior of a battery for non-limiting examples. The generative method 180 may build models that indicate the expected degree of variance in the produced quality metrics of the battery in volume and scale-up production.

Once data from tests is integrated into the system, then models can be built using full three-dimensional fidelity, enabling the monitoring of the processes and changes that take place within the storage device (*e*.*g*., a battery) in high fidelity and for different parts of the storage device lifecycle. Such models may be a constructed pyramid of physical property-based characteristics, geometry-based characteristics, process-based characteristics, and testing-based data. Further, as additional data is generated, these models may be versioned and then incremented relative to their predecessors and evaluated as to their value accuracy and error predictions.

At action (3), above, the computer-based system 104 may run the design space experimental design across the variables using the models as predictors, taking the models as mimetics for physical tests, and may use Monte-Carlo and evolutionary approaches to identify optimum solutions to the design space requirements.

At action (4), above, the computer-based system 104 may store data to a database (not shown). For non-limiting example, the computer-based system 104 may store the models, their versions, their inputs/outputs/parameters/components in the database for both tracking and tracing activities and to build an increased store of knowledge and predictions. Since simulations may be rapid and may perform screening and validation of complex solutions, the ability to make approximate trade-offs at a lower resolution to identify domains of design space interest (*e*.*g*., chemical, recipe and process) is useful.

At action (5), above, the computer-based system 104 may filter on user or defined machine criteria. Filtering and sorting the outputs of the models within the system provides the ability for a user in the loop pareto-based optimization and enables the additional generation of value and sub-scenario analysis of the produced data. This is useful in the post base-model construction phase of hybrid or adversarial training processes.

At action (6), the computer-based system 104 may select best candidates and confirm the design. Real-world evidence of the predictions may be made and linked to experimental data. Deviations in the model predictions may be linked to the model version and a re-learning process may be initiated, automatically, to improve and optimize the models in a cyclic form.

At action (7), the computer-based system 104 may iterate. In this approach, a useful element is the integrated data and cyclicity of the process. The data is generated from both experimentation (real) and models (virtual). The balance between real and virtual shifts as the computer-based system 104 builds models and data within its framework. A value is that specifications and limits on materials, processes, innovations in chemistry can be virtually screened and optimized without the need for continuous testing and may be confirmed at the end of a cycle. FIG. 2, disclosed below, is a block diagram of an example embodiment of a computer-based system 204 that may be employed as the computer-based system 104 and may be employed to implement the actions (1)-(7), disclosed above.

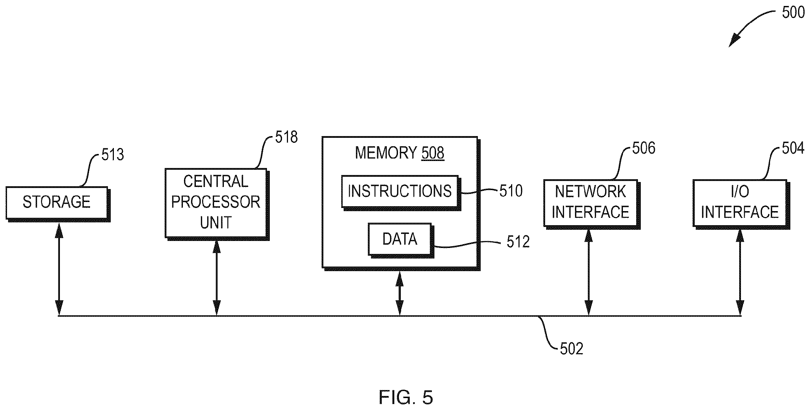

FIG. 2 is a block diagram of an example embodiment of a computer-based system 204 for generative design of an energy storage device 206. The computer-based system 204 may be employed as the computer-based system 104 of FIG. 1A, disclosed above. The computer-based system 204 comprises at least one memory 208 and at least one processor 218 coupled to the at least one memory 208, such as the central processor unit 518 coupled to the memory 508, disclosed further below with regard to FIG. 5 for non-limiting example.

Continuing with reference to FIG. 2, the at least one processor 218 of the computer-based system 204 is configured to automatically build, based on a design parameter space 210, at least one model 212 of the energy storage device 206. Such building may employ a machine learning process 214. The at least one processor 218 may be further configured to automatically perform a simulation 216 of the energy storage device 206. The simulation 216 may employ the design parameter space 210, a design evaluation space 220, and the at least one model 212 built. The performing 216 may include producing at least one prediction 222 of the energy storage device 206 achieving at least one product design objective (not shown) or the at least one model 212 built achieving at least one model design objective (not shown).

As noted above, building the at least one model 212 may employ the machine learning process 214. Machine learning can be used in a number of stages of model construction and evaluation. Models effectively map from parameter space to property space, and include feature generation. Features may include real-world measurements and may include aggregates, derivatives, or transformations of such real-world experiments for non-limiting examples. For non-limiting example, signals measured every second may be averaged over days or weeks for long term trend models. The augmentation of real-world evidence with derived or generated features can be performed using models. Further, when large descriptor spaces are so generated, the selection of critical variables that actually map to the properties of interest can be performed using models. Of course, the evaluation of models, namely evaluation of their construction, can be performed by machine methods. Some of these evaluations may include the model form, the functions used in the model, the model domain of applicability, the model error function, and other characteristics or metrics. Still further, the evaluation of models for optima or trade off areas can be performed with either multiple models, consensus models, adversarial models or even a system of systems models.

The at least one processor 218 may be further configured to automatically evolve at least one of (i) the design parameter space 210 and (ii) the design evaluation space 220. The evolving may be based on the at least one prediction 222 produced and may employ the machine learning process 214. In an event the at least one prediction 222 indicates the at least one product design objective (*e*.*g*., longer lifespan, lower weight, lower cost, etc.) has been achieved or the at least one model design objective (*e*.*g*., accuracy, extent of coverage, etc.) has been achieved, the at least one processor 218 may be further configured to automatically converge on the design parameter space 210 evolved, thereby completing a generative design 224 of the energy storage device 206 and, otherwise, repeat the building, performing, and evolving.

In many real-world cases, it is the constraint of the design space to a manageable series of axes or the selection of forms and functions used within the model which influence the model's accuracy and applicability. For non-limiting example, a simple straight line linking two points can be used to model a gradient of performance, this can then be evolved as more information is presented to a polynomial fit and then, further evolved as even more information is presented to a discontinuous surface function.

Alternatively, a number of similar terms may be increased, for example, a first order model y = f(x) is linear and may be evolved to a second order model y2 = f(x) + f(y) + f(x*y) with some level of cross variable synergy. As the number of variables increases to more than three variables, the number of combinations of x, y, z, w increases to 14 and the evolution process (*i*.*e*., the evolving) may be used to identify which set or combination of these variables are best for the known data, *i*.*e*., best fit the known data. In the evolution process, the variables and their functions, polynomial or non-linear, may be described by an encoded pattern. The pattern may be ranked against the data and then pairwise cross overs may be performed randomly to form a second generation. The second generation may be rank ordered and compared to the first generation and the best set may be taken forward for the next full iteration of function evolution. An advantage of such evolving may be realized both in terms of the scope and spread of fit functions that the system can handle, as well as the non-obvious findings it can uncover. It is this identification of key variables and their combination(s) which allows a reduction of the dimensionality of the design space and its prioritization for virtual and real testing.

The at least one model 212 may include a materials model, mixture and recipe model, configuration and design model, process and production model, usage and end-of-life model, or a combination thereof for non-limiting examples.

The at least one processor 218 may be further configured to implement the machine learning process 214 and to employ a generative adversarial network (GAN), deep neural network (DNN), Bayesian optimization (BAO), genetic function approximation method, or combination thereof, in the machine learning process 214.

The design evaluation space 220 may include at least one test (not shown) of the energy storage device 206. To perform the simulation 216, the at least one processor 218 may be further configured to simulate the at least one test using the at least one model 212 built.

The at least one product design objective may include at least one user-specified criterion (not shown) associated with the energy storage device 206, at least one machine-generated criterion (not shown) associated with the energy storage device 206, or a combination thereof. The at least one product design objective may further include a TPP.

The at least one model design objective may include at least one error threshold associated with a difference between simulated and real-world measurement, a target size for the design parameter space 210, or a combination thereof.

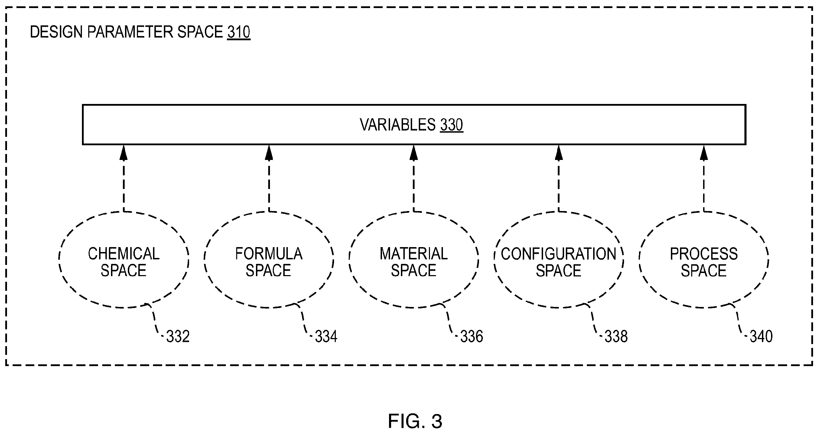

The design parameter space 210 may include semantically structured real-world evidence (RWE) data (not shown) that is associated with experimentation of the energy storage device 206. The design parameter space 210 and design evaluation space 220 may be associated with at least one of: the energy storage device 206 and the at least one model 212 built. The design parameter space 210 may include variables, such as disclosed with regard to FIG. 3, below.

FIG. 3 is a block diagram of an example embodiment of a design parameter space 310 that may be employed as the design parameter space 210 of FIG. 2, disclosed above. In the example embodiment of FIG. 3, the design parameter space 310 includes variables 330. With reference to FIG. 2 and FIG. 3, the variables 330 may include material variables (not shown), system variables (not shown), or a combination thereof for non-limiting examples. The variables 330 may be associated with a chemical space 332 of the energy storage device 206, formula space 334 of the energy storage device 206, material space 336 of the energy storage device 206, configuration space 338 of the energy storage device 206, process space 340 of the energy storage device 206, or a combination thereof.

With reference back to FIG. 2, for the computer-based system 204 to automatically evolve the design parameter space 210, design evaluation space 220, or a combination thereof, the at least one processor 218 may be further configured to: (a) prune the design parameter space 210, (b) prune the design evaluation space 220, (c) expand the design parameter space 210, (d) expand the design evaluation space 220, or (e) a combination of (a)-(d). The at least one processor 218 may be further configured to maintain diversity within the design parameter space 210 by employing a clustering method, pareto method, or combination thereof for non-limiting examples.

The at least one processor 218 may be further configured to employ at least one monitored parameter (not shown) in the building, evolving, or combination thereof. The at least one monitored parameter may be employed in at least one iteration of the building, evolving, or combination thereof. The at least one monitored parameter may represent at least one real-world result generated via at least one real-world experiment employing the energy storage device 206. The real-world result may be effectuated via use, in the at least one real-world experiment, of the design parameter space 210 evolved.

The at least one processor 218 may be further configured to automatically store, in the at least one memory 208, the at least one model 212 built in association with the at least one prediction 222 produced, at least one input (not shown) of the at least one model 212 built, and at least one output (not shown) from the at least one model 212 built. To perform the simulation 216, the at least one processor 218 may be further configured to input the at least one input to the at least one model 212 built. The at least one model 212 built may be configured to generate the at least one output in response to the at least one input.

According to a non-limiting example, the energy storage device 206 may be a battery, such as disclosed above with regard to FIG. 1A. To converge on the design parameter space 210 evolved, the at least one processor 218 may be further configured to identify at least one of a compound, ingredient, additive, formula, recipe, or combination thereof that enables the at least one product design objective of the energy storage device 206 to be achieved. With reference back to FIG. 1A and for non-limiting example, the at least one product design objective may be that no deformations 113 form at the center 115 of the jelly roll of the energy storage device 106 over a specified life cycle. The generative design of the energy storage device 106 may be implemented via a computer-implemented method, such as disclosed below with regard to FIG. 4.

FIG. 4 is a flow diagram of an example embodiment of a computer-implemented method (400) for generative design of an energy storage device. The method begins (402) and automatically builds (404) at least one model of an energy storage device. The building (404) may be based on a design parameter space and employ a machine learning process. The computer-implemented method automatically performs (406) a simulation of the energy storage device. The simulation may employ the design parameter space, a design evaluation space, and the at least one model built. The performing (406) may include producing at least one prediction of the energy storage device achieving at least one product design objective or the at least one model built achieving at least one model design objective. The computer-implemented method automatically evolves (408) at least one of (i) the design parameter space and (ii) the design evaluation space. The evolving (408) may be based on the at least one prediction produced and may employ the machine learning process. The computer-implemented method checks (410) whether the at least one prediction indicates the at least one product design objective has been achieved or the at least one model design objective has been achieved. In an event the at least one prediction indicates the at least one product design objective has been achieved or the at least one model design objective has been achieved, the computer-implemented method automatically converges (412) on the design parameter space evolved, thereby completing a generative design of the energy storage device, and the computer-implemented method thereafter ends (414) in the example embodiment. Otherwise, the computer-implemented method repeats the building (404), performing (406), and evolving (408) disclosed above.

The evolving (408) may include (a) pruning the design parameter space, (b) pruning the design evaluation space, (c) expanding the design parameter space, (d) expanding the design evaluation space, or (e) a combination of (a)-(d). The evolving (408) may include maintaining diversity within the design parameter space. The maintaining may include employing a clustering method, pareto method, or a combination thereof.

The computer-implemented method (400) may further comprise employing at least one monitored parameter in the building, evolving, or combination thereof. The at least one monitored parameter may be employed in at least one iteration of the building (404), evolving (408), or combination thereof. The at least one monitored parameter may represent at least one real-world result generated via at least one real-world experiment employing the energy storage device. The real-world result may be effectuated based on employing, in the at least one real-world experiment, the design parameter space evolved.

The computer-implemented method (400) may further comprise employing a GAN, DNN, BAO, genetic function approximation method, or a combination thereof, in the machine learning process.

The computer-implemented method (400) may further comprise automatically storing, in a database, the at least one model built in association with the at least one prediction produced, at least one input of the at least one model built, and at least one output from the at least one model built. Performing the simulation may include inputting the at least one input to the at least one model built and, in response to the at least one input, generating the at least one output from the at least one model built.

The energy storage device may be a battery. Converging (412) on the design parameter space evolved may include identifying at least one of a compound, ingredient, additive, formula, recipe, or combination thereof that enables the at least one product design objective of the energy storage device to be achieved. The computer-implemented method (400) may be implemented via a computer with an internal structure, such as disclosed below for non-limiting example.

FIG. 5 is a block diagram of an example of an internal structure of a computer 500 in which various embodiments of the present disclosure may be implemented. The computer 500 contains a system bus 502, where a bus is a set of hardware lines used for data transfer among the components of a computer or digital processing system. The system bus 502 is essentially a shared conduit that connects different elements of a computer system (*e*.*g*., processor, disk storage, memory, input/output ports, network ports, etc.) that enables the transfer of information between the elements. Coupled to the system bus 502 is an I/O device interface 504 for connecting various input and output devices (*e*.*g*., keyboard, mouse, display monitors, printers, speakers, microphone, etc.) to the computer 500. A network interface 506 allows the computer 500 to connect to various other devices attached to a network (*e*.*g*., global computer network, wide area network, local area network, etc.). Memory 508 provides volatile or non-volatile storage for computer software instructions 510 and data 512 that may be used to implement embodiments (*e*.*g*., method 150, 400) of the present disclosure, where the volatile and non-volatile memories are examples of non-transitory media. Disk storage 513 also provides non-volatile storage for the computer software instructions 510 and data 512 that may be used to implement embodiments (*e*.*g*., method 400) of the present disclosure. A central processor unit 518 is also coupled to the system bus 502 and provides for the execution of computer instructions.

Further example embodiments disclosed herein may be configured using a computer program product; for example, controls may be programmed in software for implementing example embodiments. Further example embodiments may include a non-transitory computer-readable-medium that contains instructions that may be executed by a processor, and, when loaded and executed, cause the processor to complete methods and techniques described herein. It should be understood that elements of the block and flow diagrams may be implemented in software or hardware, such as via one or more arrangements of circuitry of FIG. 5, disclosed above, or equivalents thereof, firmware, a combination thereof, or other similar implementation determined in the future.

In addition, the elements of the block and flow diagrams described herein may be combined or divided in any manner in software, hardware, or firmware. If implemented in software, the software may be written in any language that can support the example embodiments disclosed herein. The software may be stored in any form of computer readable medium, such as random-access memory (RAM), read only memory (ROM), compact disk read-only memory (CD-ROM), and so forth. In operation, a general purpose or application-specific processor or processing core loads and executes software in a manner well understood in the art. It should be understood further that the block and flow diagrams may include more or fewer elements, be arranged or oriented differently, or be represented differently. It should be understood that implementation may dictate the block, flow, and/or network diagrams and the number of block and flow diagrams illustrating the execution of embodiments disclosed herein.

While example embodiments have been particularly shown and described, it will be understood by those skilled in the art that various changes in form and details may be made therein without departing from the scope of the embodiments encompassed by the appended claims.

## Claims

1. A computer-implemented method for generative design of an energy storage device that can be fabricated, the computer-implemented method comprising:
automatically building at least one model of an energy storage device, the building based on a design parameter space and employing a machine learning process;
automatically performing a simulation of the energy storage device, the simulation employing the design parameter space, a design evaluation space, and the at least one model built, the performing including producing at least one prediction of the energy storage device achieving at least one product design objective or the at least one model built achieving at least one model design objective;
automatically evolving the design parameter space and, optionally, the design evaluation space, the evolving based on the at least one prediction produced and employing the machine learning process;
employing at least one monitored parameter in the building, evolving, or combination thereof, the at least one monitored parameter representing at least one real-world result generated via at least one real-world experiment employing the energy storage device, the real-world result effectuated based on employing, in the at least one real-world experiment, the design parameter space evolved; and
in an event the at least one prediction indicates the at least one product design objective has been achieved or the at least one model design objective has been achieved, automatically converging on the design parameter space evolved, thereby completing a generative design of the energy storage device and, otherwise, repeating the building, performing, and evolving.

2. The computer-implemented method of Claim 1, wherein the design parameter space and design evaluation space are associated with at least one of the energy storage device and the at least one model built, wherein the design parameter space includes variables, wherein the variables include material variables, system variables, or a combination thereof, and wherein the variables are associated with a chemical space of the energy storage device, formula space of the energy storage device, material space of the energy storage device, configuration space of the energy storage device, process space of the energy storage device, or a combination thereof.

3. The computer-implemented method of Claim 1 or 2, wherein the design evaluation space includes at least one test of the energy storage device and wherein performing the simulation includes simulating the at least one test using the at least one model built.

4. The computer-implemented method of Claim 1, 2 or 3, wherein the at least one product design objective includes at least one user-specified criterion associated with the energy storage device, at least one machine-generated criterion associated with the energy storage device, or a combination thereof, wherein the at least one product design objective includes a target product profile (TPP), and wherein the at least one model design objective includes at least one error threshold associated with a difference between simulated and real-world measurement, a target size for the design parameter space, or a combination thereof.

5. The computer-implemented method of any one of Claims 1 to 4, wherein the evolving includes (a) pruning the design parameter space, (b) pruning the design evaluation space, (c) expanding the design parameter space, (d) expanding the design evaluation space, or (e) a combination of (a)-(d).

6. The computer-implemented method of any one of Claims 1 to 5, wherein the evolving includes maintaining diversity within the design parameter space and wherein the maintaining includes employing a clustering method, pareto method, or a combination thereof.

7. The computer-implemented method of any one of Claims 1 to 6, further comprising employing a generative adversarial network (GAN), deep neural network (DNN), Bayesian optimization (BAO), genetic function approximation method, or a combination thereof, in the machine learning process.

8. The computer-implemented method of any one of Claims 1 to 7, wherein the design parameter space includes semantically structured real-world evidence (RWE) data associated with experimentation of the energy storage device.

9. The computer-implemented method of any one of Claims 1 to 8, further comprising automatically storing, in a database, the at least one model built in association with the at least one prediction produced, at least one input of the at least one model built, and at least one output from the at least one model built, wherein performing the simulation includes inputting the at least one input to the at least one model built and, in response to the at least one input, generating the at least one output from the at least one model built.

10. The computer-implemented method of any one of Claims 1 to 9, wherein the energy storage device is a battery and wherein converging on the design parameter space evolved includes identifying at least one of a compound, ingredient, additive, formula, recipe, or combination thereof that enables the at least one product design objective of the energy storage device to be achieved.

11. A computer-based system for generative design of an energy storage device, the computer-based system comprising:
at least one memory; and
at least one processor coupled to the at least one memory, the at least one processor configured to perform the computer-implemented method of any one of Claims 1 to 10.

12. A non-transitory computer-readable medium for generative design of an energy storage device, the non-transitory computer-readable medium having encoded thereon a sequence of instructions which, when loaded and executed by at least one processor, causes the at least one processor to perform the computer-implemented method of any one of Claims 1 to 10.

13. A computer program comprising a sequence of instructions which, when loaded and executed by at least one processor, causes the at least one processor to perform the computer-implemented method of any one of Claims 1 to 10.

## Patentansprüche

1. Computerimplementiertes Verfahren für generative Konstruktion einer Energiespeichervorrichtung, die hergestellt werden kann, das computerimplementierte Verfahren umfassend:
automatisches Erstellen von mindestens einem Modell einer Energiespeichervorrichtung, wobei das Erstellen auf einem Konstruktionsparameterraum basiert und ein maschineller Lernprozess eingesetzt wird;
automatisches Durchführen einer Simulation der Energiespeichervorrichtung, wobei die Simulation den Konstruktionsparameterraum, einen Konstruktionsbewertungsraum und das mindestens eine erstellte Modell verwendet, wobei das Durchführen das Erzeugen von mindestens einer Vorhersage beinhaltet, dass die Energiespeichervorrichtung mindestens ein Produktkonstruktionsziel erreicht oder das mindestens eine erstellte Modell mindestens ein Modellkonstruktionsziel erreicht;
automatisches Weiterentwickeln des Konstruktionsparameterraums und optional des Konstruktionsbewertungsraums, wobei das Weiterentwickeln auf der mindestens einen erzeugten Vorhersage basiert und das maschinelle Lernverfahren eingesetzt wird;
Einsetzen von mindestens einem überwachten Parameter beim Erstellen, Weiterentwickeln oder einer Kombination davon, wobei der mindestens eine überwachte Parameter mindestens ein reales Resultat repräsentiert, das durch mindestens ein reales Experiment unter Verwendung der Energiespeichervorrichtung erzeugt wird, wobei das reale Resultat auf einem Einsetzen des weiterentwickelten Konstruktionsparameterraums in dem mindestens einen realen Experiment basiert;
und für den Fall, dass die mindestens eine Vorhersage angibt, dass das mindestens eine Produktkonstruktionsziel erreicht wurde oder das mindestens eine Modellkonstruktionsziel erreicht wurde, automatisches Konvergieren auf den weiterentwickelten Konstruktionsparameterraum, wodurch eine generative Konstruktion der Energiespeichervorrichtung abgeschlossen ist, und andernfalls Wiederholen des Erstellens, Durchführens und Weiterentwickelns.

2. Computerimplementiertes Verfahren nach Anspruch 1, wobei der Konstruktionsparameterraum und der Konstruktionsbewertungsraum mit mindestens einem von der Energiespeichervorrichtung und dem mindestens einen erstellten Modell assoziiert sind, wobei der Konstruktionsparameterraum Variablen beinhaltet, wobei die Variablen Materialvariablen, Systemvariablen oder eine Kombination davon beinhalten, und wobei die Variablen mit einem chemischen Raum der Energiespeichervorrichtung, einem Formelraum der Energiespeichervorrichtung, einem Materialraum der Energiespeichervorrichtung, einem Konfigurationsraum der Energiespeichervorrichtung, einem Prozessraum der Energiespeichervorrichtung oder einer Kombination davon assoziiert sind.

3. Computerimplementiertes Verfahren nach Anspruch 1 oder 2, wobei der Konstruktionsbewertungsraum mindestens einen Test der Energiespeichervorrichtung beinhaltet und wobei ein Durchführen der Simulation ein Simulieren des mindestens einen Tests unter Verwendung des mindestens einen erstellten Modells beinhaltet.

4. Computerimplementiertes Verfahren nach Anspruch 1, 2 oder 3, wobei das mindestens eine Produktkonstruktionsziel mindestens ein benutzerspezifiziertes Kriterium, das mit der Energiespeichervorrichtung assoziiert ist, mindestens ein maschinell erzeugtes Kriterium, das mit der Energiespeichervorrichtung assoziiert ist, oder eine Kombination davon umfasst, wobei das mindestens eine Produktkonstruktionsziel ein Zielproduktprofil (TPP) beinhaltet, und wobei das mindestens eine Modellkonstruktionsziel mindestens einen Fehlerschwellenwert, der mit einem Unterschied zwischen simulierten und realen Messungen assoziiert ist, eine Zielgröße für den Konstruktionsparameterraum oder eine Kombination davon beinhaltet.

5. Computerimplementiertes Verfahren nach einem der Ansprüche 1 bis 4, wobei das Weiterentwickeln (a) Beschneiden des Konstruktionsparameterraums, (b) Beschneiden des Konstruktionsbewertungsraums, (c) Erweitern des Konstruktionsparameterraums, (d) Erweitern des Konstruktionsbewertungsraums oder (e) eine Kombination aus (a)-(d) beinhaltet.

6. Computerimplementiertes Verfahren nach einem der Ansprüche 1 bis 5, wobei das Weiterentwickeln ein Beibehalten der Diversität innerhalb des Konstruktionsparameterraums beinhaltet und wobei das Beibehalten ein Einsetzen eines Clustering-Verfahrens, Pareto-Verfahrens oder einer Kombination davon beinhaltet.

7. Computerimplementiertes Verfahren nach einem der Ansprüche 1 bis 6, ferner umfassend ein Einsetzen eines generativen gegnerischen Netzes (GAN), eines tiefen neuronalen Netzes (DNN), eines Bayesschen Optimierungsverfahrens (BAO), eines genetischen Funktionsannäherungsverfahrens oder einer Kombination davon in dem maschinellen Lernverfahren.

8. Computerimplementiertes Verfahren nach einem der Ansprüche 1 bis 7, wobei der Konstruktionsparameterraum semantisch strukturierte Daten von Real-World-Evidence (RWE) beinhaltet, die mit Experimenten der Energiespeichervorrichtung assoziiert sind.

9. Computerimplementiertes Verfahren nach einem der Ansprüche 1 bis 8, ferner umfassend ein automatisches Speichern des mindestens einen erstellten Modells in einer Datenbank in Assoziation mit der mindestens einen erzeugten Vorhersage, mindestens einem Input des mindestens einen erstellten Modells und mindestens einem Output des mindestens einen erstellten Modells, wobei ein Durchführen der Simulation ein Eingeben der mindestens einen Eingabe in das mindestens eine erstellte Modell und als Antwort auf die mindestens eine Eingabe ein Erzeugen des mindestens einen Outputs aus dem mindestens einen erstellten Modell beinhaltet.

10. Computerimplementiertes Verfahren nach einem der Ansprüche 1 bis 9, wobei die Energiespeichervorrichtung eine Batterie ist und wobei ein Konvergieren auf den weiterentwickelten Konstruktionsparameterraum ein Identifizieren von mindestens einer Verbindung, Zutat, Additiv, Formel, Rezeptur oder einer Kombination davon beinhaltet, die ein Erreichen des mindestens einen Produktkonstruktionsziels der Energiespeichervorrichtung ermöglicht.

11. Computerbasiertes System für generative Konstruktion einer Energiespeichervorrichtung, das computerbasierte System umfassend:
mindestens einen Speicher;
und mindestens einen Prozessor, der mit dem mindestens einen Speicher gekoppelt ist, wobei der mindestens eine Prozessor konfiguriert ist, um das computerimplementierte Verfahren nach einem der Ansprüche 1 bis 10 auszuführen.

12. Nicht-transitorisches, computerlesbares Medium für generative Konstruktion einer Energiespeichervorrichtung, wobei das nicht-transitorische, computerlesbare Medium eine darauf codierte Anweisungssequenz aufweist, die, wenn sie von mindestens einem Prozessor geladen und ausgeführt wird, den mindestens einen Prozessor veranlasst, das computerimplementierte Verfahren nach einem der Ansprüche 1 bis 10 auszuführen.

13. Computerprogramm, umfassend eine Abfolge von Anweisungen, die, wenn sie von mindestens einem Prozessor geladen und ausgeführt werden, den mindestens einen Prozessor veranlassen, das computerimplementierte Verfahren nach einem der Ansprüche 1 bis 10 auszuführen.

## Revendications

1. Procédé mis en œuvre par ordinateur pour la conception générative d'un dispositif de stockage d'énergie pouvant être fabriqué, le procédé mis en œuvre par ordinateur comprenant :
la construction automatique d'au moins un modèle d'un dispositif de stockage d'énergie, la construction étant basée sur un espace de paramètres de conception et utilisant un processus d'apprentissage automatique ;
la réalisation automatique d'une simulation du dispositif de stockage d'énergie, la simulation utilisant l'espace de paramètres de conception, un espace d'évaluation de conception et l'au moins un modèle construit, la réalisation comprenant la production d'au moins une prédiction que le dispositif de stockage d'énergie atteigne au moins un objectif de conception de produit ou que l'au moins un modèle construit atteigne au moins un objectif de conception de modèle ;
l'évolution automatique de l'espace de paramètres de conception et, éventuellement, de l'espace d'évaluation de conception, l'évolution étant basée sur l'au moins une prédiction produite et utilisant le processus d'apprentissage automatique ;
l'utilisation d'au moins un paramètre surveillé lors de la construction, de l'évolution, ou d'une combinaison de celles-ci, l'au moins un paramètre surveillé représentant au moins un résultat réel généré via au moins une expérience réelle utilisant le dispositif de stockage d'énergie, le résultat réel étant mis en œuvre sur la base de l'utilisation, dans l'au moins une expérience réelle, de l'espace de paramètres de conception évolué ; et
dans le cas où l'au moins une prédiction indique que l'au moins un objectif de conception de produit a été atteint ou que l'au moins un objectif de conception de modèle a été atteint, la convergence automatique sur l'espace de paramètres de conception évolué, complétant ainsi une conception générative du dispositif de stockage d'énergie et, dans le cas contraire, la répétition de la construction, de la réalisation et de l'évolution.

2. Procédé mis en œuvre par ordinateur selon la revendication 1, dans lequel l'espace de paramètres de conception et l'espace d'évaluation de conception sont associés à au moins l'un parmi le dispositif de stockage d'énergie et l'au moins un modèle construit, dans lequel l'espace de paramètres de conception comprend des variables, dans lequel les variables comprennent des variables de matériau, des variables de système, ou une combinaison de celles-ci, et dans lequel les variables sont associées à un espace chimique du dispositif de stockage d'énergie, un espace de formules du dispositif de stockage d'énergie, un espace de matériaux du dispositif de stockage d'énergie, un espace de configuration du dispositif de stockage d'énergie, un espace de processus du dispositif de stockage d'énergie, ou une combinaison de ceux-ci.

3. Procédé mis en œuvre par ordinateur selon la revendication 1 ou 2, dans lequel l'espace d'évaluation de conception comprend au moins un test du dispositif de stockage d'énergie et dans lequel la réalisation de la simulation comprend la simulation de l'au moins un test à l'aide de l'au moins un modèle construit.

4. Procédé mis en œuvre par ordinateur selon la revendication 1, 2 ou 3, dans lequel l'au moins un objectif de conception de produit comprend au moins un critère spécifié par l'utilisateur associé au dispositif de stockage d'énergie, au moins un critère généré par machine associé au dispositif de stockage d'énergie, ou une combinaison de ceux-ci, dans lequel l'au moins un objectif de conception de produit comprend un profil de produit cible (TPP), et dans lequel l'au moins un objectif de conception de modèle comprend au moins un seuil d'erreur associé à une différence entre une mesure simulée et une mesure réelle, une taille cible pour l'espace de paramètres de conception, ou une combinaison de ceux-ci.

5. Procédé mis en œuvre par ordinateur selon l'une quelconque des revendications 1 à 4, dans lequel l'évolution comprend (a) l'élagage de l'espace de paramètres de conception, (b) l'élagage de l'espace d'évaluation de conception, (c) l'expansion de l'espace de paramètres de conception, (d) l'expansion de l'espace d'évaluation de conception, ou (e) une combinaison de (a)-(d).

6. Procédé mis en œuvre par ordinateur selon l'une quelconque des revendications 1 à 5, dans lequel l'évolution comprend le maintien de la diversité au sein de l'espace de paramètres de conception, et dans lequel le maintien comprend l'utilisation d'une méthode de regroupement, d'une méthode de Pareto, ou d'une combinaison de celles-ci.

7. Procédé mis en œuvre par ordinateur selon l'une quelconque des revendications 1 à 6, comprenant en outre l'utilisation d'un réseau antagoniste génératif (GAN), d'un réseau de neurones profond (DNN), d'une optimisation bayésienne (BAO), d'une méthode d'approximation de fonction génétique, ou d'une combinaison de ceux-ci, dans le processus d'apprentissage automatique.

8. Procédé mis en œuvre par ordinateur selon l'une quelconque des revendications 1 à 7, dans lequel l'espace de paramètres de conception comprend des données de preuves réelles (RWE) structurées sémantiquement associées à l'expérimentation du dispositif de stockage d'énergie.

9. Procédé mis en œuvre par ordinateur selon l'une quelconque des revendications 1 à 8, comprenant en outre le stockage automatique, dans une base de données, de l'au moins un modèle construit en association avec l'au moins une prédiction produite, au moins une entrée de l'au moins un modèle construit, et au moins une sortie de l'au moins un modèle construit, dans lequel la réalisation de la simulation comprend l'introduction de l'au moins une entrée dans l'au moins un modèle construit et, en réponse à l'au moins une entrée, la génération de l'au moins une sortie à partir de l'au moins un modèle construit.

10. Procédé mis en œuvre par ordinateur selon l'une quelconque des revendications 1 à 9, dans lequel le dispositif de stockage d'énergie est une batterie et dans lequel la convergence sur l'espace de paramètres de conception évolué comprend l'identification d'au moins l'un des éléments parmi un composé, un ingrédient, un additif, une formule, une recette, ou une combinaison de ceux-ci permettant d'atteindre l'au moins un objectif de conception de produit du dispositif de stockage d'énergie.

11. Système informatisé pour la conception générative d'un dispositif de stockage d'énergie, le système informatisé comprenant :
au moins une mémoire ; et
au moins un processeur couplé à l'au moins une mémoire, l'au moins un processeur étant configuré pour mettre en œuvre le procédé mis en œuvre par ordinateur selon l'une quelconque des revendications 1 à 10.

12. Support informatique non transitoire lisible par ordinateur pour la conception générative d'un dispositif de stockage d'énergie, le support informatique non transitoire comportant une séquence d'instructions codées sur celui-ci, qui, lorsqu'elles sont chargées et exécutées par au moins un processeur, amènent l'au moins un processeur à mettre en œuvre le procédé mis en œuvre par ordinateur selon l'une quelconque des revendications 1 à 10.

13. Produit-programme informatique comprenant une séquence d'instructions qui, lorsqu'elles sont chargées et exécutées par au moins un processeur, amènent l'au moins un processeur à mettre en œuvre le procédé mis en œuvre par ordinateur selon l'une quelconque des revendications 1 à 10.
